# EUROPEAN PATENT APPLICATION

(11) **EP 4 506 837 A2**
(43) Date of publication of application: **12.02.2025**
(21) Application number: 23785073.0
(22) Date of filing: 28.03.2023
(51) Int. Cl.: G06F 17/40, G06Q 30/018, G06F 21/64, G06F 7/04

(54) **NETWORK PLATFORM FOR THE DISTRIBUTION OF MEDIA CONTENT**

(30) Priority: 06.04.2022 RU 2022109139
(71) Applicant: Bekmambetov, Timur, Moscow, 127051 (RU)
(72) Inventor: Bekmambetov, Timur, Moscow, 127051 (RU)
(74) Representative: Valet Patent Services Limited
(86) International application number: PCT/RU2023/050068
(87) International publication number: WO 2023/195882

(57) **Abstract**

The invention relates to the field of information technology and can be used for certifying the intellectual property rights of a rights holder by means of a digital signature, as well as well as for displaying information about copyright. The technical result is an increase in the reliability of a system for the distribution of media content. A network platform for the distribution of media content comprises a module for receiving a digital signature, a processing module, a database of digital files, a secure repository for persoiulized digital signatures of copyright holders, a module for certifying intellectual property rights, and a web interface for interaction with a user.

## Description

The invention relates to the field of information technologies and can be used for certifying the intellectual property right of the right holder on the basis of a digital signature, as well as displaying information on copyrights.

Protecting valuable digital content (e.g., music, games, videos, photos, and books) from illegal copying and use by multiple people is a pressing issue for content owners. Content distributors take protective measures to help prevent content piracy. Digital-Rights Management (DRM) is a popular phrase used to describe the specified copyright protection and organization of rules related to the access and processing of digital products. The DRM system is implemented using robust electronic devices that are protected from unauthorized tampering.

In a known DRM application scenario, a couple of roles are involved, namely a content provider device, a rights publisher device, and an end-user client device. In order to purchase (i.e. access/use) a piece of digital content, the client device first connects to the content provider via the network in order to obtain (via downloading while connected to the network or by other offline means) an encrypted version of said digital content. The content provider then connects to the rights publisher to make payment, and receives license data authorizing access to the digital content. A content key is included in the license data to decrypt the digital content. The license data is encrypted through the rights publisher using the content provider's secret key, so that only the content provider can find the content key to decrypt the digital content.

Publishing digital content by a person/individual or a small company has its own characteristics that are different from the scenario of publishing digital content by a large company. When the content creator is a person or a small company, he/she can only play the role of content provider and often has a web site/server to publish the content, but the content creator does not have the ability to provide DRM service and therefore must request a separate organization to act as the rights publisher. In this case, the content provider and the rights publisher are independent organizations.

Thus, there is a need to address the requirements of both the content provider and the rights publisher when they are independent organizations.

In addition, the end user (content buyer) wants to be assured that by purchasing content, he or she will receive content from an authorized author who guarantees its integrity and is responsible for its content.

The objective of the present invention is to provide a universal networking platform for processing, storing, digitally signing digital files of media content, managing digital rights of media content, and distributing media content to end users.

The technical result is to increase the reliability of the media content distribution system.

The network platform for media content distribution contains a module for receiving a digital file, a processing module, a database of digital files, a secure repository of personalized digital signatures of copyright holders, a module for certifying intellectual property rights, and a web interface for user interaction. The digital file receiving module is implemented to receive digital files of media content from a right holder. The processing module is implemented with the ability to transcode, compress and compare the received digital file with existing files to check its uniqueness. The intellectual property right certification module is implemented with the ability to apply a digital signature to all copies of the digital file. The digital file database provides storage of the processed digital files. The web interface for interaction with the user through a graphical user interface provides the right holder with the ability to upload digital files to the platform, apply a digital signature to the digital files, set the parameters of the license associated with the digital file, and provides the end user with the ability to download the digital files.

The use of digital signatures to provide strong author authentication and content integrity control enhances system security, thereby increasing the reliability of the content distribution system.

The media content distribution platform includes a web version, IOS and Android app.

The platform's functionality includes:
- Authentication and authorship of digital files, which will enable the creation of copyrighted content for sale;
- affixing a personalized digital signature to the digital file to authenticate each copy In a preferred embodiment of use, the platform authenticates intellectual property rights based on a digital signature using the following algorithm:
- the author (right holder) uploads the digital file to the platform;
- the platform processes the digital file and checks its uniqueness (whether a similar file has been uploaded before);
- the platform uploads the digital file to its public database for distribution and consumption by end users and assigns it a unique digital code;
- using the tools available on the platform, the author (right holder) puts a unique digital signature on the digital file;
- the author sets the number of copies of the digital file he wants to release and sell on the platform, and sets the price of each specific copy.

The author (copyright holder) may be the owner, creator, or provider of the content, such as a musician, movie studio, publisher, software company, author, cell phone service provider, Internet download or subscription service, cable or satellite television provider, corporate officer, etc., or an agent acting on his or her behalf. A digital file (content) may contain any electronic content, such as digital video, audio or text content, a movie, song, video game, piece of software, e-mail message, text message, word processing document, report, or any other entertainment, business or other content.

To certify the intellectual property right, digital files are uploaded to the platform with the subsequent application of a unique and protected digital signature to each copy (copy) of these files. This method will make it possible to authenticate the authenticity of each specific file and their belonging to a specific author (right holder).

The platform software provides interaction between the intellectual property right certification module, the service for buying and selling digital files and their users (content right holders and buyers of digitally signed digital files). Also, the platform software allows the platform to act as an intermediary and connect sellers of digital files and their buyers.

The platform uses a digital file processing mechanism that links the license to the content. The license is based on policies or other desires of the right holder, and specifies permitted and/or prohibited modes of use of the content and/or one or more conditions that the modes of use of the content must satisfy, or that must be met as a condition or consequence of use. The content is protected by a digital signature module to certify the intellectual property right.

The platform includes a DRM creation mechanism that is responsible for packaging licenses (e.g., licenses containing DRM objects, management objects, controllers, protectors, etc.). The DRM creation mechanism may also associate metadata with the license to explain, in a human-readable form, what the license does.

The platform software performs the following functions:
provides a graphical user interface through which content and license information can be specified;
content encryption;
applying a unique and protected digital signature to each copy of content; creating DRM objects that constitute the license.

The web interface provides the user interface and is responsible for retrieving information, such as links to content and actions that the user (typically the content owner or provider) wants to take (e.g., who to link the content to, what terms of use to include in the license, etc.). The user interface may also display information about the content processing, such as the text of the issued license, and, in case of failure, the reason for the failure.

The platform provides content transcoding and compression, as well as content encryption, which is performed through the content encryption services module.

The proposed network platform can be realized on the basis of a single computing device (e.g., a server) or on the basis of a distributed computing system, in which certain tasks are performed by remote processing devices that are connected via a data transmission network. In a distributed computing system, program modules can be placed both in local and remote storage devices.

The server comprises a central processing unit (additionally, the server may comprise a plurality of co-processors), system memory, and a system bus that contains various system components including memory associated with the central processing unit. The server may be organized using a multiprocessor architecture. The system bus is implemented as any prior art bus structure containing, in turn, a bus memory or bus memory controller, a peripheral bus, and a local bus that is capable of interfacing with any other bus architecture. The system memory contains persistent storage (P3Y), random access memory (O3Y). The basic input/output system (BIOS), contains the basic routines that enable the transfer of information between server elements, for example, when the operating system is booted using P3Y.

The digital file retrieval module may further be operable to generate a textual representation of the digital file. The digital content retrieval module may include machine-readable instructions, wherein the network platform processor is capable of performing speech and/or image recognition to generate a textual representation of the digital media content. Speech recognition algorithms are well known in the art, but as an example, such an algorithm may be implemented by means of a deep neural network that can account for a plurality of interdependent speech attributes.

The processing module includes a digital media content separation module capable of parsing the textual representation of the digital media content. Based on the syntactic analysis of the textual representation of the digital media content, the digital media content separation module is provided with the capability of separating the digital media content into an ordered plurality of fragments. In addition, the digital media content separation module may be operable to analyze an audio representation of the digital media content and determine, in particular, intonation, musical accompaniment, voice timbre, voice tempo, voice tone, pauses, and the like. The digital media content separation module may also be operable to analyze a visual representation of the digital media content and determine, in particular, background, scene, color, image recognition, and the like.

The digital media content separation module is designed to divide digital media content into an ordered set of fragments based on a pre-trained machine learning algorithm. The machine learning algorithm is pre-trained to separate the digital media content into a plurality of fragments, wherein the input parameters of the machine learning algorithm are parsing (parsing) data of a textual representation of the digital content, and the training of the machine learning algorithm is training with a teacher based on a training sample. As additional input parameters of the machine learning algorithm, the results of analyzing the audio and/or visual representation of the digital content may be specified.

The machine learning algorithm is further pre-trained to divide the digital content into a plurality of fragments based on analyzing an audio representation of the digital content, in particular the presence of pauses and their duration between sentences, changing characteristics of the speaker's voice, etc. may be used in dividing the digital content into an ordered plurality of fragments.

The machine learning algorithm is further pre-trained to divide the digital content into a plurality of fragments based on analyzing a visual representation of the digital content, in particular scene changeability may be used in dividing the digital content into an ordered plurality of fragments.

Machine learning algorithms will enable more efficient systematization and analysis of large amounts of data, as well as optimize the operation of the network platform.

Content and licenses may be made available to end users by any suitable means, e.g., over a network such as the Internet, a local area network, a wireless network, a virtual private network, a wide area network, and/or the like, via cable, satellite, broadcast, or cellular communications, and/or via recordable media such as a CD-ROM, digital versatile disk, flash memory card, or the like. Content may be delivered to the user in conjunction with the license in a single packet or transmission, or in separate packets or transmissions received from ONE OR different SOURCES.

An end-user computing device (e.g., personal computer, cell phone, television and/or settop box, portable audio and/or video player, e-book reader, and/or the like) includes application software, hardware, and/or specialized logic device that is capable of retrieving and presenting content. The end-user computing device also includes software and/or hardware, referred to herein as a digital rights management (DRM) mechanism, for evaluating the license associated with the content and applying its terms (and/or allowing the application to apply those terms), for example, by selectively granting the user access to the content only if the license permits it. The digital rights management mechanism may be structurally or functionally integrated with the application, or may comprise a separate piece of software and/or hardware.

A computing device includes a processor, memory, a user interface, a port for inserting removable memory, a network interface, and one or more buses for interconnecting the aforementioned elements. Operation of the embedded device is controlled by the processor operating under the control of programs stored in the memory. The memory includes high-speed operational memory (O3Y) and non-volatile memory, such as magnetic disk and/or flash memory. The port may include a disk drive or memory slot for receiving computer-readable media, such as floppy disks, CD disks, memory cards, other magnetic or optical media, and/or the like. The network interface is capable of providing a connection between the computing device and other computing devices (and/or networks of computing devices) via a network, such as the Internet or an intranet, and may utilize one or more communication technologies to physically establish such a connection (e.g., wireless).

The digital rights management mechanism has a license evaluation unit that determines whether the license is valid, reviews the rules and requirements in a valid license and determines, based on the review of the rules and requirements in the license, whether the requesting end device user has the right to reproduce the requested digital file, etc. It should be clear that the digital rights management mechanism in a DRM system is entrusted with fulfilling the requirements of the copyright holder of the digital file according to the rules and requirements in the license, and the user should not be able to simply change such an eligibility element for his own purposes.

To play media content, a decryption key is obtained from the license and applied to the resulting digital media content file to produce the actual media content and then actually play the actual media content. Rights may include the right to play, read, edit, copy, print the media content, etc. Terms may include minimum system requirements, date and time restrictions, number of plays, etc.

The user of the endpoint device is granted temporary or permanent rights to consume media content with respect to individual media content elements, according to the permissions to consume media content defined in the network platform. The permissions may specify one or more of the following conditions: how the user may play the media content (e.g., streaming and/or downloading), whether the user is allowed to play the media content any number of times within a predetermined time interval (duration of use, such as two days or a week), or whether the number of plays is limited.

The digital rights management engine in the end-user's end-user device may also record information relating to the end-user's access to or other use of protected content. This information is transmitted to the platform, for use in calculating revenue (e.g., royalties, entertainment fees, etc.), determining end user preferences, enforcing system policies (e.g., monitoring the use of sensitive information), and the like. The platform then remits royalties to the copyright holder based on this information and collects a commission from each sale of digital files with a unique digital signature.

The memory of an embedded device may include various programs or modules that control the operation of the embedded device. The memory includes an operating system for controlling application execution, peripheral device operation, and the like, and a DRM mechanism for implementing rights management functions. The DRM mechanism may contain, interact with, and/or manage various other modules, such as a virtual machine for executing control programs and a state database for storing state information used by the virtual machine, and/or one or more cryptographic modules for performing cryptographic operations, such as encrypting and/or decrypting content, computing hash functions and message authentication codes, evaluating digital signatures, and the like. The memory also includes protected content and associated licenses, as well as cryptographic keys, certificates, and the like. The cryptographic signature verification operation is performed by the cryptographic services block.

There is a well-known disadvantage in the distribution of media content, which is that if the rights container provider stops working for any reason, the user loses all collected content. Conventional technical solutions retain the rights to use a piece of content in a license specifically granted to one user and one particular platform. To solve this problem, one option uses blockchain technology to provide end-user access to media content.

The data structure of a blockchain is an ordered list of blocks. Each block points backward strictly to its predecessor until it reaches the first block in the blockchain, commonly referred to as the "originating" or "genesis block. These blocks and the integrity of their sequence are protected through cryptographic hashes that communicate backwards.

Computer systems use rights blockchains to manage access to media content. An entitlement blockchain contains an organized sequence of data blocks that store user information and content objects. Initially, a rights blockchain contains a single block, called the primary block, that stores user information. As usage rights for content objects are obtained, blocks are added to the rights blockchain, where each new block specifies usage rights for one or more content objects and contains a reference to the previous block in the rights blockchain.

When a user acquires rights to a content object from a content provider or some other entity, the user system forwards the user rights blockchain to the content provider's computer system, and the content provider system and the registration system update the user rights blockchain to reflect the new rights and add a new block for the new content. The content provider system returns the updated rights blockchain and the corresponding encrypted content data representing the content object, and the user system stores the accepted data. When the user acquires additional usage rights, the content provider system and the registration system update the user's rights blockchain again, adding a new block for the new content.

When a user wants to access content, the user's system provides the content data and rights blockchain to a computerized DRM management system. The DRM management system verifies the rights blockchain and confirms that the access falls within the scope of the usage rights provided as part of the corresponding block from the rights blockchain. After performing the verification and confirmation, the DRM management system decrypts or facilitates decryption of the encrypted content data so that the user system can access the decrypted content.

One embodiment implements the ability to utilize features and resources of the network platform on Third Party Websites using known plug-in technology.

The browser plug-in (plug-in) provides design and development of Web applications and is cross-platform.

To implement running an external application in a browser using a plugin on a 3rd party Web page is required:
1. Add a standard HTML label (as an inline or object label and their attribute type value) when composing an HTML web page;
2. Add a browser plug-in to an external application, that is, add the plug-in interface of the external application to the dynamic link library (DLL) files of the external application;
3. Upon receiving a label click event, the browser module passes such an event to the plug-in module of an external application added to the external application by calling the interface of such application. The plugin module of the external application calls the API-an interface represented by an OS module and used to run external applications.

The label is embedded and associated with the external application by setting the value of the embedded label type attribute. Additionally, the label may be an object label and associated with the external application by setting an attribute value of the object label type attribute. Preferably, one plug-in module of the software application is added to the external application. By passing a click event to the plugin module of the external application, the browser passes such an event by invoking a program interface on the side of the external application.

Thus, when a user opens a web page in a browser, such page contains one embedded label representing a plugin. The embedded label is represented as a plugin on the web page. The purpose of the web page is for the browser to automatically launch an external application when the user clicks the label or plugin on the web page. After receiving the event when the user clicks the label or plugin, the browser passes the event to the browser plugin interface implementation module, and finally the click event is passed to the external application plugin module. The external application plugin module, while processing the click event, calls the ARl interface which is applied to launch the application by assigning the external application to be launched in the called parameters.

The external application module is a module of the Network Platform Web Interface for media content distribution. After receiving a click event sent by the browser module, the external application plug-in module invokes a graphical user interface to launch the Network Platform Web Interface.

When the plug-in is launched by the media content author, the Web Interface further provides the above-mentioned features of the preferred embodiment:
- the author (right holder) uploads the digital file to the platform;
- the platform processes the digital file and checks its uniqueness (whether a similar file has been uploaded before);
- the platform uploads the digital file to its public database for distribution and consumption by end users and assigns it a unique digital code;
- using the tools available on the platform, the author (right holder) puts a unique digital signature on the digital file;
- the author sets the number of copies of the digital file he wants to release and sell on the platform, and sets the price of each specific copy.

When the plug-in is launched by the end device user (buyer), the Web interface further provides the ability to purchase media content, view information about the author of the media content, play, download, edit, etc. the media content.

It is to be understood that modifications may be made to the embodiments described above within their respective concepts of the invention, and the present invention is not limited to the specific embodiments described, but it is understood that it encompasses modifications within the essence and scope of the present invention as defined in the appended claims.

## Claims

1. A network platform for distribution of media content, comprising a digital file receiving module capable of receiving digital files of media content from a copyright holder, a processing module capable of transcoding, compressing and comparing the received digital file with existing files to verify its uniqueness, a digital file database providing storage of processed digital files, a secure storage of personalized digital signatures of copyright holders, a module for certifying the right to intellectual property rights, a digital file database providing storage of processed digital files, and a digital file database providing storage of personalized digital signatures of copyright holders.
